# EUROPEAN PATENT SPECIFICATION

(11) **EP 2 150 567 B1**
(45) Date of publication and mention of the grant of the patent: **15.09.2010**
(21) Application number: 08755826.8
(22) Date of filing: 19.05.2008
(51) Int. Cl.: C08G 18/75, C08G 18/32

(54) **Rigid, aliphatic thermoplastic polyurethanes**
Harte, aliphatische thermoplastische Polyurethane
polyuréthanes thermoplastiques, rigides et aliphatiques

(30) Priority: 21.05.2007 US 931057 P
(43) Date of publication of application: 10.02.2010
(73) Proprietor: Lubrizol Advanced Materials, Inc., Cleveland, OH 44141-3247 (US)
(72) Inventor: ROBINSON, Daphne, N., Broadview Heights, OH 44147 (US); WARAKOMSKI, John, M., Midland, MI 48642 (US); ARGYROPOULOS, John, N., Midland, MI 48640 (US); WECKLE, Cheryl, L., Midland, MI 48640 (US)
(74) Representative: von Kreisler Selting Werner
(86) International application number: PCT/US2008/064058
(87) International publication number: WO 2008/144614

(56) References cited:
- WO-A-96/23826
- WO-A-97/42248
- WO-A-2004/041899

## Description

The instant invention is in the field of rigid engineering thermoplastic polyurethane polymers.

Polyurethane polymers are well known. Polyurethane polymers are made by reacting a polyisocyanate with a polyol. If the polyisocyanate or polyol functionality is greater than two per monomer, then the resulting polymer will tend to be crosslinkes. To obtain uncrosslinked thermoplastic polyurethane polymers, the functionality of each monomer should be substantially two.

A problem with existing rigid engineering thermoplastic polyurethane polymers is poor weatherability. Most rigid engineering thermoplastic polyurethane polymers are made with an aromatic diisocyanate such as methylenebis(phenyl isocyanate) (MDI) which absorbs sunlight in the ultraviolet region of the spectrum, and therefore degrades. Evidence of this photodegradation is seen by discoloration and embrittlement. Thus, there remains a need for improved weatherability characteristics in rigid engineering thermoplastic polyurethane polymers and especially for a rigid engineering thermoplastic polyurethane polymer that would be transparent, weatherable, and tough.

Rigid engineering thermoplastic polyurethanes are defined in US 6,156,417 by Edwards et al. These polymers have a glass transition temperature of at least 50°C and contain units formed from the reaction of a polyisocyanate, a difunctional chain extender, and optionally, a high molecular weight diol. The hard segments are formed by reaction between the polyisocyanate and difunctional chain extender, and the soft segments are formed by the reaction between the polyisocyanate and the high molecular weight diol. Preferably the hard segment constitutes not less than about 75%, and more preferably not less than about 90% by weight of the rigid thermoplastic polyurethane. Polyurethanes containing higher amounts of soft segment are considered elastomeric thermoplastic polyurethanes and are not usually not considered to be suitable for engineering plastic applications. It is the rigid engineering thermoplastic polyurethanes that are the subject of this invention.

The instant invention provides a solution to the above-mentioned problems. The instant invention is a rigid thermoplastic polyurethane made by reacting a diisocyanate with a diol, wherein the diisocyanate comprises a mixture of positional and geometric isomers of bis(isocyanatomethyl) cyclohexane. In the preferred case the diol comprises a diol selected from the group consisting of one or more positional and geometric isomers of cyclohexanedimethanol, 1,6-hexanediol and mixtures thereof. Other preferred diols are D-glucitol, 1,4:3,6-dianhydro- (Chemical Abstracts Registry Number 652-67-5, commonly referred to as isosorbide) and D-glucitol, 1,4:3,6-dianhydro-2,5-bis-O-(2-hydroxyethyl)-(Chemical Abstracts Registry Number 581094-81-7, also referred to as ethoxylated isosorbide). These diols are derived from natural sugar. Another preferred diol is cyclohexanol, 4,4'-(1-methylethylidene)bis- (Chemical Abstracts Registry Number 80-04-6, commonly referred to as hydrogenated bisphenol-A). In another embodiment, the instant invention is an object made from such rigid thermoplastic polyurethane.

The instant invention is a polyurethane made by reacting a diisocyanate with a diol, wherein the diisocyanate comprises or consists essentially of a mixture of positional and geometric isomers of bis(isocyanatomethyl) cyclohexane and wherein the diol comprises or consists essentially of a diol selected from the group consisting of one or more positional and geometric isomers of cyclohexanedimethanol and 1,6-hexanediol. The meaning of the terms "positional" and "geometric" isomers herein are defined in Solomons, "Organic Chemistry." John Wiley & Sons, 1976, pages 231-232.

When the diisocyanate consists essentially of a mixture of 1,3-cis, 1,3-trans, 1,4-cis, and 1,4-trans bis(isocyanatomethyl) cyclohexane and wherein the diol consists essentially of a mixture of 1,3-cis, 1,3-trans, 1,4-cis, and 1,4-trans cyclohexanedimethanol, then preferably the 1,3-cis content of the diisocyanate and the diol is in the range of 20 to 50 weight percent, the 1,3 trans content of the diisocyanate and the diol is in the range of 5 to 35 weight percent, the 1,4-cis content of the diisocyanate and the diol is in the range of 5 to 30 weight percent, and the 1,4-trans content of the diisocyanate and the diol is in the range of 15 to 50 weight percent. Most preferably, the 1,3-cis content of the diisocyanate and the diol is about 36 weight percent, the 1,3 trans content of the diisocyanate and the diol is about 18 weight percent, the 1,4-cis content of the diisocyanate and the diol is about 13 weight percent, and the 1,4-trans content of the diisocyanate and the diol is about 33 weight percent. Several positional and geometric isomers of cyclohexanedimethanol and bis(isocyanatomethyl) cyclohexane are commercially available from The Dow Chemical Company (Midland, MI) and can be made according to the teachings of US Patent 6,252,121 and US Patent Application Publication 2004/0087754, herein fully incorporated by reference. The diol can optionally comprise poly(tetramethylene ether) glycol or other fairly low molecular weight polymeric diols as long as the resulting polyurethane is rigid thermoplastic polyurethane. Typically the polymeric diols are used at amounts less than 20 weight percent. More preferable less than 15 weight percent, and most preferably less than 10 weight percent in the polymerization mixture. The preferred molecular weight of the polymeric diol is less than 2000 Daltons, more preferred molecular weight is less than 1000 Daltons, and most preferred molecular weight is less than 650 Daltons. 1,6-hexanediol and poly(tetramethylene ether) glycol are commercially available from, for example, Spectrum Chemicals & Laboratory Products, Gardena CA and Invista, Wichita KS, respectively. US 2004/0887754A teaches polyurethanes from the isomeric mixture of bis(isocyanatomethyl)cyclohexane, but the polyurethanes are elastomers, not rigid engineering thermoplastic polyurethanes. When rigid engineering thermoplastic polyurethane are made from the isomeric mixture of bis(isocyanatomethyl)cyclohexane according to the instant invention surprisingly high flexural strength, flexural modulus and tensile strength are obtained together with good weatherability characteristics.

In another embodiment the instant invention is an object made of the rigid thermoplastic polyurethane of the instant invention. Such an object can be formed, without limitation thereto, by techniques such as injection molding, blow molding, compression molding, thermoforming, sheet extrusion or coextrusion, film extrusion or coextrusion, extrusion coating, and profile extrusion. Such an object can be, without limitation thereto, selected from the group consisting of architectural glazing, security/ballistic glazing, transportation (bus, rail, automotive, aircraft, military) glazing, sign and display glazing, greenhouse (and solarium and skylight) glazing, solar cells for heating water, photovoltaic cell glazing, automotive sunroofs, automotive lighting (lens, reflector, housing, and/or mounting), interior automotive instrument panel and trim components, an optical lens, eyeware frames and lenses, a lighting globe or dome (especially in harsh outdoor and industrial environments where durability and weatherability are required), utility lighting (e.g., surgical lights, reflectors, flashlights), a blood collection vial, dialysis components, other medical devices, sporting equipment (e.g., as part of snow or water skis, racquets, watercraft), personal protective equipment for recreation and industry (e.g., helmets, face shields, shin guards), a film, a sheet, an extruded shape or hollow tube, and a molded article.

### EXAMPLE 1.

A rigid thermoplastic polyurethane of the instant invention is synthesized by what is known in the art as the "one shot" reactive extrusion process. The chain extender and isocyanate are metered into the feed port of a Werner & Pfleiderer ZSK twin screw extruder. The feed rates of the chain extender(s), catalyst, and isocyanate are controlled such that the molar ratio of diisocyanate reactive groups to hydroxyl reactive groups (NCO/OH) is 1.005/1.000. The rotational speed of the extruder is kept constant. The additives are injected into the side feed port of the extruder. The extruder temperature set points range from 90 °C to 230 °C. The resulting polymer exiting the die is chilled then cut into cylindrical pellets. The resulting pellets are placed in the hopper of de-humidifying, desiccant dryer for 16 hours. The dried pellets are packaged in a moisture barrier, foiled lined bags. Approximately 9 kg of materials are prepared.

The diisocyanate consists essentially of a mixture of 36% 1,3-cis bis(isocyanatomethyl) cyclohexane, 18% 1,3-trans bistisocyanatomethyl) cyclohexane, 13% 1 ,4-ci; bis(isocyanatomethyl) cyclohexane, and 33% 1,4-trans bis(isocyanatomethyl) cyclohexane added at 61.56% by weight. This composition is abbreviated as ADI (aliphatic diisocyanate mixture). The chain extender diol is 1,6-hexanediol added at 37.27% by weight. The ratio of diisocyanate reactive groups to hydroxyl reactive groups (NCO/OH) is 1.005/1.000. The catatyst is Formrez UL-22 organotin catalyst bis(dodecylthio)dimethylstannane added at 0.06% by weight. Lubricant is ADVAWAX 280 (N, N'-ethylene bis-stearamide) from AKROCHEM added at 0.5% by weight. Stabilizers are Irganox 1010 (hydrocinnamic acid. 3.5-di-tert-butyl-4-hydroxy-, neopentanetetrayl ester) added at 0.25% by weight and tris(nonylphenyl)phosphite (TNPP) added at 0.3% by weight.

The rigid thermoplastic polyurethane of this example has higher strength and modulus than the corresponding aromatic control rigid thermoplastic polyurethane made with methylenebis(phenyl isocyanate), along with improved weatherability due to its aliphatic structure. Molded articles are clear and colorless with excellent optical properties.

### EXAMPLE 2.

A rigid thermoplastic polyurethane of the instant invention is synthesized using the "one shot" reactive extrusion process of Example 1. The diisocyanate consists essentially of a mixture of 36% 1,3-cis bis(isocyanatomethyl) cyclohexane, 18% 1,3-trans bis(isocyanatomethyl) cyclohexane, 13% 1,4-cis bis(isocyanatomethyl) cyclohexane, and 33% 1,4-trans bis(isocyanatomethyl) cyclohexane added at 55.58% by weight. This composition is abbreviated as ADI (aliphatic diisocyanate mixture). Two chain extender diols are used. The first is CHDM-D at 23.75% by weight. This product is 1,4-cyclohexanedimethanol from Eastman. The second is 1,6-hexanediol added at 12.98% by weight. In addition, a high molecular weight polyol is added to impart some flexibility, however the amount is less than that needed to form an elastomeric polyurethane. The polyol is PTMEG 650 (polytetramethylene etherglycol of 650 molecular weight) added at 5.71% by weight. The ratio of diisocyanate reactive groups to hydroxyl reactive groups (NCO/OH) is 1.005/1.000. The catalyst is Formrez UL-22 organotin catalyst bis(dodecylthio)dimethylstannane added at 0.06% by weight. Lubricants are ADVAWAX 280 (N, N'-ethylene bis-stearamide) from AKROCHEM added at 0.5% by weight and stearyl alcohol added at 0.82%. Stabilizers are Irganox 1010 (hydrocinnamic acid, 3,5-ditert-butyl-4-hydroxy-, neopentanetetrayl ester) added at 0.25% by weight and tris(nonylphenyl)phosphite (TNPP) added at 0.3% by weight.

The rigid thermoplastic polyurethane of this example has higher strength and modulus than the corresponding aromatic control rigid thermoplastic polyurethane made with methylenebis(phenyl isocyanate), along with improved weatherability due to its aliphatic structure. Molded articles are clear and colorless with excellent optical properties.

### EXAMPLE 3.

A rigid thermoplastic polyurethane of the instant invention is synthesized using the "one shot" reactive extrusion process of Example 1. The diisocyanate consists essentially of a mixture of 36% 1,3-cis bis(isocyanatomethyl) cyclohexane, 18% 1,3-trans bis(isocyanatomethyl) cyclohexane, 13% 1,4-cis bis(isocyanatomethyl) cyclohexane, and 33% 1,4-trans bis(isocyanatomethyl) cyclohexane added at 56.84% by weight. This composition is abbreviated as ADI (aliphatic diisocyanate mixture). The chain extender diol is CHDM-D at 41.99% by weight. This product is 1,4-cyclohexanedimethanol from Eastman. The ratio of diisocyanate reactive groups to hydroxyl reactive groups (NCO/OH) is 1.005/1.000. The catalyst is Formrez UL-22 organotin catalyst bis(dodecylthio)dimethylstannane added at 0.12% by weight. Lubricant is ADVAWAX 280 (N, N'-ethylene bis-stearamide) from AKROCHEM added at 0.5% by weight. Stabilizers are Irganox 1010 (hydrocinnamic acid, 3,5-di-tert-butyl-4-hydroxy-, neopentanetetrayl ester) added at 0.25% by weight and tris(nonylphenyl)phosphite (TNPP) added at 0.3% by weight.

The rigid thermoplastic polyurethane of this example has only slightly lower strength but higher modulus than the corresponding aromatic control rigid thermoplastic polyurethane made with methylenebis(phenyl isocyanate), along with improved weatherability due to its aliphatic structure. Molded articles are clear and colorless with excellent optical properties.

### EXAMPLE 4.

A rigid thermoplastic polyurethane of the instant invention is synthesized as follows. The diisocyanate consists essentially of mixture of 36% 1,3-cis bis(isocyanatomethyl) cyclohexane, 18% 1,3-trans bis(isoicyanatomethyl) cyclohexane, 13% 1,4-cis bis(isocyanatomethyl) cyclohexane, and 33% 1,4-trans bis(isocyanatomethyl) cyclohexane added at 56.84% by weight. This composition is abbreviated as ADI (aliphatic diisocyanate mixture). The chain extender diols is UNOXOL™ diol mixture at 41.99% by weight. This product is essentially of a mixture or 36% 1,3-cis cyclohexanedimethanol, 18% 1,3-trans cyclohexanedimethanol, 13% 1,4-cis cyclohexanedimethanol, and 33% 1,4-trans cyclohexanedimethanol from Dow. The ratio of diisocyanate reactive groups to hydroxyl reactive groups (NCO/OH) is 1.005/1.000. The catalyst is Formrez UL-22 organotin catalyst bis(dodecylthio)dimethylstannane added at 0.12% by weight. Lubricant is ADVAWAX 280 (N, N'-ethylene bis-stearamide) from AKROCHEM added at 0.5% by weight. Stabilizers are Irganox 1010 (hydrocinnamic acid, 3,5-di-tert-butyl-4-hydroxy-, neopentanetetrayl ester) added at 0.25% by weight and tris(nonylphenyl)phosphite (TNPP) added at 0.3% by weight.

The rigid thermoplastic polyurethane of this example has significantly higher strength (more than fivefold) and higher modulus than the rigid thermoplastic polyurethane of COMPARATIVE EXAMPLE 1.

### EXAMPLE 5

A rigid thermoplastic polyurethane of the instant invention is synthesized in a Haake Rheomix 3000p mixer equipped with a 310 cm³ chamber and roller rotors. The reactor is purged well with nitrogen, heated to 170°C and the rotors are set to 50 rpm. Using a plastic syringe, a weighed amount of UNOXOL™ diol (Dow) is quickly added to the chamber. This diol is a mixture of about 36% 1,3-cis cyclohexanedimethanol, about 18% 1,3-trans cyclohexanedimethanol, about 13% 1,4-cis cyclohexanedimethanol, and about 33% 1,4-trans cyclohexanedimethanol. Next is added using a plastic syringe, a weighed amount of an isomeric mixture of aliphatic diisocyanates (Dow). The diisocyanate mixture consists of about 36% 1,3-cis -bis(isocyanatomethyl)cyclohexane, about 18% 1,3-trans - bis(isocyanatomethyl)cyclohexane, about 13% 1,4-cis -bis(isocyanatomethyl)cyclohexane and about 33% 1,4-trans -bis(isocyanatomethyl)cyclohexane. The molar ratio of diisocyanate to diol is 1.04:1.00. The rotor speed is increased to 200 rpm, and 30 seconds later, four drops of DABCO T-9 stannous octoate catalyst (Air Products) is added and then the plunger is lowered to cover the feed port. The torque rapidly increases to about 165 Newton-meters, then gradually decreases and levels off at about 40 Newton-meters. Compared to the controls (COMPARATIVE EXAMPLE 2 and COMPARATIVE EXAMPLE 3), this invention surprisingly reaches about 3.5 times greater maximum torque during polymerization and about 2.0 times greater final torque at the conclusion of polymerization. This higher measured maximum torque may indicate faster polymerization, which is advantageous in manufacturing. The higher final torque may also indicate achievement of higher molecular weight, which often leads to improved mechanical properties. After 10 minutes the rotors are turned off and the molten rigid engineering thermoplastic polyurethane (TPU) product is removed with brass spatulas, flattened on Teflon sheet, then dried overnight in a desiccating dryer. Differential scanning calorimetry is done on the product with a TA Instruments 2910 DSC V4.4E using the following program: (1) perform first scan from room temperature to 300°C at 20°C/minute, (2) cool to room temperature at 30°C/minute, (3) perform second scan from room temperature to 300°C at 20°C/minute, (4) cool to room temperature at 30°C/minute. The glass transition temperature as measured by the second heating scan is about 98.9°C. The glass transition temperature of this example polymer is about 30°C lower than the control polymers, and may be a result of the isomeric mixture of diisocyanates in this invention.

### COMPARATIVE EXAMPLE 1

The thermoplastic polyurethane is synthesized using the "one shot" reactive extrusion process of Example 1. The diisocyanate is H12MDI (4,4'-methylenebis(cyclohexyl isocyanate)) added at 63.86% by weight. The chain extender diol is UNOXOL™ diol mixture at 34.97% by weight. This product is essentially of a mixture of 36% 1,3-cis cyclohexanedimethanol, 18% 1,3-trans cyclohexanedimethanol, 13% 1,4-cis cyclohexanedimethanol, and 33% 1,4-trans cyclohexanedimethanol from Dow. The ratio of diisocyanate reactive groups to hydroxyl reactive groups (NCO/OH) is 1.005/1.000. The catalyst is Formrez UL-22 organotin catalyst bis(dodecylthio)dimethylstannane added at 0.12% by weight. Lubricant is ADVAWAX 280 (N, N'-ethylene bis-stearamide) from AKROCHEM added at 0.5% by weight. Stabilizers are Irganox 1010 (hydrocinnamic acid, 3,5-di-tert-butyl-4-hydroxy-, neopentanetetrayl ester) added at 0.25% by weight and tris(nonylphenyl)phosphite (TNPP) added at 0.3% by weight.

### COMPARATIVE EXAMPLE 2

A comparative rigid aliphatic engineering thermoplastic polyurethane resin is synthesized in a Haake Rheomix 3000p mixer equipped with a 310 cm³ chamber and roller rotors. The reactor is purged well with nitrogen, heated to 170°C and the rotors are set to 50 rpm. Using a plastic syringe, a weighed amount of UNOXOL™ diol (Dow) is quickly added to the chamber. This diol is a mixture of about 36% 1,3-cis cyclohexanedimethanol, about 18% 1,3-trans cyclohexanedimethanol, about 13% 1,4-cis cyclohexanedimethanol, and about 33% 1,4-trans cyclohexanedimethanol. Next is added using a plastic syringe, isophorone diisocyanate (IPDI, Aldrich). The molar ratio of diisocyanate to diol is 1.04: 1.00. The rotor speed is increased to 200 rpm, and 30 seconds later, four drops of DABCO T-9 stannous octoate catalyst (Air Products) is added and then the plunger is lowered to cover the feed port. The torque rapidly increases to about 45 Newton-meters, then gradually decreases and levels off at about 25 Newton-meters. After 10 minutes the rotors are turned off and the molten rigid engineering thermoplastic polyurethane (TPU) product is removed with brass spatulas, flattened on Teflon sheet, then dried overnight in a desiccating dryer. Differential scanning calorimetry is done on the product with a TA Instruments 2910 DSC V4.4E using the following program: (1) perform first scan from room temperature to 300°C at 20°C/minute, (2) cool to room temperature at 30°C/minute, (3) perform second scan from room temperature to 300°C at 20°C/minute, (4) cool to room temperature at 30°C/minute. The glass transition temperature as measured by the second heating scan is about 137.0°C.

### COMPARATIVE EXAMPLE 3

A comparative rigid aliphatic engineering thermoplastic polyurethane resin is synthesized in a Haake Rheomix 3000p mixer equipped with a 310 cm³ chamber and roller rotors. The reactor is purged well with nitrogen, heated to 170°C and the rotors are set to 50 rpm. Using a plastic syringe, a weighed amount of UNOXOL™ diol (Dow) is quickly added to the chamber. This diol is a mixture of about 36% 1,3-cis cyclohexanedimethanol, about 18% 1,3-trans cyclohexanedimethanol, about 13% 1,4-cis cyclohexanedimethanol, and about 33% 1,4-trans cyclohexanedimethanol. Next is added using a plastic syringe, 4,4'-methylenebis(cyclohexyl isocyanate) (H12MDI, Aldrich). The molar ratio of diisocyanate to diol is 1.04: 1.00. The rotor speed is increased to 200 rpm, and 30 seconds later, four drops of DABCO T-9 stannous octoate catalyst (Air Products) is added and then the plunger is lowered to cover the feed port. The torque rapidly increases to about 46 Newton-meters, then gradually decreases and levels, off at about 18 Newton-meters. After 10 minutes the rotors are turned off and the molten rigid engineering thermoplastic polyurethane (TPU) product is removed with brass spatulas, flattened on Teflon sheet, then dried overnight in a desiccating dryer. Differential scanning calorimetry is done on the product with a TA Instruments 2910 DSC V4.4E using then following program: (1) perform first scan from room temperature to 300°C at 20°C/minute, (2) cool to room temperature at 30°C/minute, (3) perform second scan from room temperature to 300°C at 20°C/minute, (4) cool to room temperature at 30°C/minute. The glass transition temperature as measured by the second heating scan is about 132.8°C.

The data in the following Tables I and II show the improved properties of the rigid thermoplastic urethanes of the instant invention in relation to the rigid thermoplastic urethanes of the prior art.

**Table I**

| | Flexural Strength, psi | Flexural Strength, MPa | Flexural Modulus, 10^5 psi | Flexural Modulus GPa | Tensile Strength @ Break, psi | Tensile Strength @ Break, MPa | Tensile Modulus, 10^5 psi | Tensile Modulus, GPa | T ^{Tg}_{'} ºC |
|---|---|---|---|---|---|---|---|---|---|
| Example 1 | 15.266 | 105 | 3.90 | 2.69 | 11,324 | 78 | 3.6 | 2.48 | 53.4 |
| Comparative aromatic control TPU | 13,000 | 90 | 3.30 | 2.28 | 9,901 | 68 | 2.7 | 1.86 | |
| Example 2 | 15.386 | 106 | 3.80 | 2.62 | 11,049 | 76 | 3.7 | 2.55 | 65.0 |
| Comparative aromatic control TPU | 14,000 | 97 | 3.40 | 2.34 | 10,041 | 69 | 3.1 | 2.14 | |
| Example 3 | 15,642 | 108 | 3.90 | 2.69 | 9.651 | 67 | 4.0 | 2.76 | 93.0 |
| Comparative aromatic control TPU | 14,000 | 97 | 3.30 | 2.28 | 11,496 | 79 | 2.8 | 1.93 | |
| Example 4 | 17,269 | 119 | 4.40 | 3.03 | 10,036 | 69 | 4.5 | 3.10 | 94.2 |
| Comparative Example H12MDI based rigid TPU | 4,656 | 32 | 3.01 | 2.07 | 1,653 | 11 | 3.2 | 2.19 | 127.1 |
| | | | | | | | | | |
| psi = pounds per square inch | | | | | | | | | |
| MPa = mega Pascal = 10^6 Pascal | | | | | | | | | |
| GPa = giga Pascal = 10^9 Pascal | | | | | | | | | |

**Table II**

| | Flexural Strength, MPa | Difference vs Control | Flexural Modulus, GPa | Difference vs Control | Tensile Strength @ Break, MPa | Difference vs Control | Tensile Modulus GPa | Difference vs Control | Tg, °C |
|---|---|---|---|---|---|---|---|---|---|
| Example 1 | 105 | 17% | 2.69 | 18% | 78 | 14% | 2.48 | 33% | 53.4 |
| Comparative aromatic control TPU | 90 | | 2.28 | | 68 | | 1.86 | | |
| Example 2 | 106 | 10% | 2.62 | 12% | 76 | 10% | 2.55 | 19% | 65.0 |
| Comparative aromatic control TPU | 97 | | 2.34 | | 69 | | 2.14 | | |
| Example 3 | 108 | 12% | 2.69 | 18% | 67 | -16% | 2.76 | 43% | 93.0 |
| Comparative aromatic control TPU | 97 | | 2.28 | | 79 | | 1.93 | | |
| Example 4 | 119 | 272% | 3.03 | 46.6% | 69 | 529% | 3.10 | 42% | 94.2 |
| Comparative Example H12MDI based rigid TPU | 32 | | 2.07 | | 11 | | 2.19 | | 127.1 |
| | | | | | | | | | |
| MPa = mega Pascal 10^6 Pascal | | | | | | | | | |
| GPa = qiqa Pascal = 10^9 Pascal | | | | | | | | | |

Flexural strength and modulus are measured in accordance with ASTM test method D790 Tensile strength and modulus are measured in accordance with ASTM test method D638 Glass transition temperature (Tg) is measured by differential scanning calorimetry by scanning from -40°C to 250°C at 10°C/minute, followed by cooling to -40° at 10°C/minute and then a second scan from -40°C to 177°C at 10°C/minute to determine the Tg.

## Claims

1. A rigid thermoplastic polyurethane made by reacting a diisocyanate with a diol, wherein the diisocyanate comprises a mixture of positional and geometric isomers of bis(isocyanatomethyl) cyclohexane.

2. The rigid thermoplastic polyurethane of Claim 1, wherein the diol comprises a diol selected from the group consisting of one or more positional and geometric isomers of cyclohexanedimethanol, 1,6-hexanediol and mixtures thereof, D-glucitol, 1,4:3,6-dianhydro-; D-glucitol, 1,4:3,6-dianhydro-2,5-bis-O-(2-hydroxyethyl)-; and cyclohexanol, 4,4'-(1-methylethylidene)bis-.

3. The rigid thermoplastic polyurethane of Claim 1, wherein the diisocyanate consists essentially of a mixture of positional and geometric isomers of bis(isocyanatomethyl) cyclohexane and wherein the diol consists essentially of a diol selected from the group consisting of one or more positional and geometric isomers of cyclohexanedimethanol, 1,6-hexanediol and mixtures thereof, D-glucitol, 1,4:3,6-dianhydro-; D-glucitol, 1,4:3,6-dianhydro-2,5-bis-O-(2-hydroxyethyl)-, cyclohexanol, 4,4'-(1-methylethylidene)bis- and mixtures thereof.

4. The rigid thermoplastic polyurethane of Claim 1, wherein the diisocyanate consists essentially of a mixture of 1,3-cis, 1,3-trans, 1,4-cis, and 1,4-trans bis(isocyanatomethyl) cyclohexane and wherein the diol consists essentially of a mixture of 1,3-cis, 1,3-trans, 1,4-cis, and 1,4-trans cyclohexanedimethanol.

5. The rigid thermoplastic polyurethane of Claim 4, wherein the 1,3-cis content of the diisocyanate is in the range of 20 to 50 weight percent of the diisocyanate, wherein the 1,3 trans content of the diisocyanate is in the range of 5 to 35 weight percent of the diisocyanate, wherein the 1,4-cis content of the diisocyanate is in the range of 5 to 30 weight percent of the diisocyanate, where in the 1,4-trans content of the diisocyanate is in the range of 15 to 50 weight percent of the diisocyanate, wherein the 1,3-cis content of the diol is in the range of 20 to 50 weight percent of the diol, wherein the 1,3 trans content of the diol is in the range of 5 to 35 weight percent of the diol, wherein the 1,4-cis content of the diol is in the range of 5 to 30 weight percent of the diol, and where in the 1,4-trans content of the diol is in the range of 15 to 50 weight percent of the diol.

6. The rigid thermoplastic polyurethane of Claim 4, wherein the 1,3-cis content of the diisocyanate is about 36 weight percent of the diisocyanate, wherein the 1,3 trans content of the diisocyanate is about 18 weight percent of the diisocyanate, wherein the 1,4-cis content of the diisocyanate is about 13 weight percent of the diisocyanate, where in the 1,4-trans content of the diisocyanate is about 33 weight percent of the diisocyanate, wherein the 1,3-cis content of the diol is about 36 weight percent of the diol, wherein the 1,3 trans content of the diol is about 18 weight percent of the diol, wherein the 1,4-cis content of the diol is about 13 weight percent of the diol, and where in the 1,4-trans content of the diol is about 33 weight percent of the diol.

7. The rigid thermoplastic polyurethane of Claim 2, wherein the diol further comprises poly(teramethylene ether) glycol.

8. An object made of the rigid thermoplastic polyurethane of Claim 1.

9. The object of Claim 8, wherein the object is selected from the group consisting of architectural glazing, security/ballistic glazing, vehicle glazing, sign and display glazing, greenhouse glazing, solar cell glazing, automotive sunroofs, automotive lighting components, automotive instrument panel and trim components, an optical lens, eyeware frames and lenses, a lighting globe or dome, utility lighting, a blood collection vial, medical devices, sporting equipment, personal protective equipment for recreation and industry , a film, a sheet, an extruded shape or hollow structure, and a molded article.

10. An object made of the rigid thermoplastic polyurethane of Claim3.

11. The object of Claim 10, wherein the object is selected from the group consisting of architectural glazing, security/ballistic glazing, vehicle glazing, sign and display grazing, greenhouse glazing, solar cell glazing, automotive sunroofs, automotive lightning components, automotive instrument panel and trim components, an optical lens, eyeware frames and lenses, a lighting globe or dome, utility lighting, a blood collection vial, medical devices, sporting equipment, personal protective equipment for recreation and industry , a film, a sheet, an extruded shape or hollow structure, and a molded article.

## Patentansprüche

1. Steifes thermoplastisches Polyurethan, das durch Umsetzen eines Diisocyanats mit einem Diol hergestellt ist, wobei das Diisocyanat ein Gemisch von Stellungs- und geometrischen Isomeren von Bis(isocyanatomethyl)-cyclohexan umfasst.

2. Steifes thermoplastisches Polyurethan gemäß Anspruch 1, wobei das Diol ein Diol umfasst, das aus der Gruppe ausgewählt ist, die aus einem oder mehreren Stellungs- und geometrischen Isomeren von Cyclohexandimethanol, 1,6-Hexandiol und Gemischen davon, 1,4:3,6-Dianhydro-D-Glucit, 1,4:3,6-Dianhydro-2,5-bis-O-(2-hydroxyethyl)-D-Glucit und 4,4'-(1-Methylethyliden)biscyclohexanol besteht.

3. Steifes thermoplastisches Polyurethan gemäß Anspruch 1, wobei das Diisocyanat im Wesentlichen aus einem Gemisch von Stellungs- und geometrischen Isomeren von Bis(isocyanatomethyl)cyclohexan besteht und wobei das Diol im Wesentlichen aus einem Diol besteht, das aus der Gruppe ausgewählt ist, die aus einem oder mehreren Stellungs- und geometrischen Isomeren von Cyclohexandimethanol, 1,6-Hexandiol und Gemischen davon, 1,4:3,6-Dianhydro-D-Glucit, 1,4:3,6-Dianhydro-2,5-bis-O-(2-hydroxyethyl)-D-Glucit und 4,4'-(1-Methylethyliden)biscyclohexanol und Gemischen davon besteht.

4. Steifes thermoplastisches Polyurethan gemäß Anspruch 1, wobei das Diisocyanat im Wesentlichen aus einem Gemisch von 1,3-cis-, 1,3-trans-, 1,4-cis- und 1,4-trans-Bis(isocyanatomethyl)cyclohexan besteht und wobei das Diol im Wesentlichen aus einem Gemisch von 1,3-cis-, 1,3-trans-, 1,4-cis- und 1,4-trans-Cyclohexandimethanol besteht.

5. Steifes thermoplastisches Polyurethan gemäß Anspruch 4, wobei der 1,3-cis-Gehalt des Diisocyanats im Bereich von 20 bis 50 Gew.-% des Diisocyanats liegt, wobei der 1,3-trans-Gehalt des Diisocyanats im Bereich von 5 bis 35 Gew.-% des Diisocyanats liegt, wobei der 1,4-cis-Gehalt des Diisocyanats im Bereich von 5 bis 30 Gew.-% des Diisocyanats liegt, wobei der 1,4-trans-Gehalt des Diisocyanats im Bereich von 15 bis 50 Gew.-% des Diisocyanats liegt, wobei der 1,3-cis-Gehalt des Diols im Bereich von 20 bis 50 Gew.-% des Diols liegt, wobei der 1,3-trans-Gehalt des Diols im Bereich von 5 bis 35 Gew.-% des Diols liegt, wobei der 1,4-cis-Gehalt des Diols im Bereich von 5 bis 30 Gew.-% des Diols liegt und wobei der 1,4-trans-Gehalt des Diols im Bereich von 15 bis 50 Gew.-% des Diols liegt.

6. Steifes thermoplastisches Polyurethan gemäß Anspruch 4, wobei der 1,3-cis-Gehalt des Diisocyanats etwa 36 Gew.-% des Diisocyanats beträgt, wobei der 1,3-trans-Gehalt des Diisocyanats etwa 18 Gew.-% des Diisocyanats beträgt, wobei der 1,4-cis-Gehalt des Diisocyanats etwa 13 Gew.-% des Diisocyanats beträgt, wobei der 1,4-trans-Gehalt des Diisocyanats etwa 33 Gew.-% des Diisocyanats beträgt, wobei der 1,3-cis-Gehalt des Diols etwa 36 Gew.-% des Diols beträgt, wobei der 1,3-trans-Gehalt des Diols etwa 18 Gew.-% des Diols beträgt, wobei der 1,4-cis-Gehalt des Diols etwa 13 Ges,-% des Diols beträgt und wobei der 1,4-trans-Gehalt des Diols etwa 33 Gew.-% des Diols beträgt.

7. Steifes thermoplastisches Polyurethan gemäß Anspruch 2, wobei das Diol weiterhin Poly(tetramethylenether)glycol umfasst.

8. Objekt, bestehend aus dem steifen thermoplastischen Polyurethan gemäß Anspruch 1.

9. Objekt gemäß Anspruch 8, wobei das Objekt aus der Gruppe ausgewählt ist, die aus Gebäudeverscheibungen, Sicherheits-/kugelsicheren Verscheibungen, Fahrzeugverscheibungen, Schilder- und Anzeigeverscheibungen, Treibhausverscheibungen, Solarzellenverscheibungen, Kraftfahrzeug-Sonnendächern, Kraftfahrzeug-Beleuchtungskomponenten, KraftfahrzeugArmaturenbrett- und -Verkleidungskomponenten, einer optischen Linse, Brillengestellen und -gläsern, einer Leuchtkugel oder glockenförmigen Leuchte, Zweckbeleuchtung, einer Blutsammelampulle, medizinischen Vorrichtungen, Sportausrüstungen, Personenschutzausrüstungen für Freizeit und Gewerbe, einem Film, einer Folie, einer extrudierten Form oder Hohlstruktur oder einem Formteil besteht.

10. Objekt, bestehend aus dem steifen thermoplastischen Polyurethan gemäß Anspruch 3.

11. Objekt gemäß Anspruch 10, wobei das Objekt aus der Gruppe ausgewählt ist, die aus Gebäudeverscheibungen, Sicherheits-/kugelsicheren Verscheibungen, Fahrzeugverscheibungen, Schilder- und Anzeigeverscheibungen, Treibhausverscheibungen, Solarzellenverscheibungen, Kraftfahrzeug-Sonnendächern, Kraftfahrzeug-Beleuchtungskomponenten, KraftfahrzeugArmaturenbrett- und -Verkleidungskomponenten, einer optischen Linse, Brillengestellen und -gläsern, einer Leuchtkugel oder glockenförmigen Leuchte, Zweckbeleuchtung, einer Blutsammelampulle, medizinischen Vorrichtungen, Sportausrüstungen, Personenschutzausrüstungen für Freizeit und Gewerbe, einem Film, einer Folie, einer extrudierten Form oder Hohlstruktur oder einem Formteil besteht.

## Revendications

1. Polyuréthane thermoplastique rigide produit par réaction d'un diisocyanate avec un diol, où le diisocyanate comprend un mélange d'isomères de position et géométriques du bis(isocyanatométhyl)cyclohexane.

2. Polyuréthane thermoplastique rigide selon la revendication 1 où le diol comprend un diol choisi dans le groupe consistant en un ou plusieurs isomères de position et géométriques du cyclohexanediméthanol, 1,6-hexanediol et leurs mélanges, D-glucitol, 1,4:3,6-dianhydro- ; D-glucitol, 1,4:3,6-dianhydro-2,5-bis-O-(2-hydroxyéthyl)- ; et cyclohexanol, 4,4'-(1-méthyléthylidène)bis-.

3. Polyuréthane thermoplastique rigide selon la revendication 1 où le diisocyanate consiste essentiellement en un mélange d'isomères de position et géométriques du bis(isocyanatométhyl)cyclohexane et où le diol consiste essentiellement en un diol choisi dans le groupe consistant en un ou plusieurs isomères de position et géométriques du cyclohexanediméthanol, 1,6-hexanediol et leurs mélanges, D-glucitol, 1,4:3,6-dianhydro- ; D-glucitol, 1,4:3,6-dianhydro-2,5-bis-O-(2-hydroxyéthyl), cyclohexanol, 4,4'-(1-méthyléthylidène)bis- et leurs mélanges.

4. Polyuréthane thermoplastique rigide selon la revendication 1 où le diisocyanate consiste essentiellement en un mélange de 1,3-cis, 1,3-trans, 1,4-cis et 1,4-trans bis(isocyanatométhyl)cyclohexane et où le diol consiste essentiellement en un mélange de 1,3-cis, 1,3-trans, 1,4-cis et 1,4-trans cyclohexanediméthanol.

5. Polyuréthane thermoplastique rigide selon la revendication 4 où la teneur en 1,3-cis du diisocyanate est dans la plage de 20 à 50 % en poids du diisocyanate, où la teneur en 1,3-trans du diisocyanate est dans la plage de 5 à 35 % en poids du diisocyanate, où la teneur en 1,4-cis du diisocyanate est dans la plage de 5 à 30 % en poids du diisocyanate, où la teneur en 1,4-trans du diisocyanate est dans la plage de 15 à 50 % en poids du diisocyanate, où la teneur en 1,3-cis du diol est dans la plage de 20 à 50 % en poids du diol, où la teneur en 1,3-trans du diol est dans la plage de 5 à 35 % en poids du diol, où la teneur en 1,4-cis du diol est dans la plage de 5 à 30 % en poids du diol, et où la teneur en 1,4-trans du diol est dans la plage de 15 à 50 % en poids du diol.

6. Polyuréthane thermoplastique rigide selon la revendication 4 où la teneur en 1,3-cis du diisocyanate est d'environ 36 en poids du diisocyanate, où la teneur en 1,3-trans du diisocyanate est d'environ 18 % en poids du diisocyanate, où la teneur en 1,4-cis du diisocyanate est d'environ 13 % poids du diisocyanate, où la teneur en 1,4-trans du diisocyanate est d'environ 33 % en poids du diisocyanate, où la teneur en 1,3-cis du diol est d'environ 36 % en poids du diol, où la teneur en 1,3-trans du diol est d'environ 18 % en poids du diol, où la teneur en 1,4-cis du diol est d'environ 13 % en poids du diol, et où la teneur en 1,4-trans du diol est d'environ 33 % en poids du diol.

7. Polyuréthane thermoplastique rigide selon la revendication 2 où le diol comprend en outre du poly(tétraméthylène éther)glycol.

8. Objet constitué par le polyuréthane thermoplastique rigide selon la revendication 1.

9. Objet selon la revendication 8 où l'objet est choisi dans le groupe consistant en un vitrage architectural, un vitrage de sécurité/balistique, un vitrage de véhicule, un vitrage de signalisation et d'affichage, un vitrage de serre, un vitrage de cellule solaire, les toits ouvrants de véhicules automobiles, les composants d'éclairage de véhicules automobiles, les composants de tableau de bord et de garniture intérieure de véhicules automobiles, une lentille optique, les montures et verres de lunetterie, un globe ou dôme d'éclairage, un éclairage polyvalent, un flacon de collecte de sang, les dispositifs médicaux, un équipement de sport, un équipement de protection personnelle pour la distraction et l'industrie, un film, une feuille, une forme ou structure creuse extrudée, et un article moulé.

10. Objet constitué par le polyuréthane thermoplastique rigide selon la revendication 3.

11. Objet selon la revendication 10 où l'objet est choisi dans le groupe consistant en un vitrage architectural, un vitrage de sécurité/balistique, un vitrage de véhicule, un vitrage de signalisation et d'affichage, un vitrage de serre, un vitrage de cellule solaire, les toits ouvrants de véhicules automobiles, les composants d'éclairage de véhicules automobiles, les composants de tableau de bord et de garniture intérieure de véhicules automobiles, une lentille optique, les montures et verres de lunetterie, un globe ou dôme d'éclairage, un éclairage polyvalent, un flacon de collecte de sang, les dispositifs médicaux, un équipement de sport, un équipement de protection personnelle pour la distraction et l'industrie, un film, une feuille, une forme ou structure creuse extrudée, et un article moulé.
